(19) Europäisches Patentamt
European Patent Office
Office européen des brevets

(11) Veröffentlichungsnummer: **0 229 626 B1**

(12) # EUROPÄISCHE PATENTSCHRIFT

(45) Veröffentlichungstag der Patentschrift: **20.06.90**

(51) Int. Cl.[5]: **C08G 75/02**

(21) Anmeldenummer: **87100087.3**

(22) Anmeldetag: **07.01.87**

(54) **Polyarylensulfide mit definiert einstellbaren Schmelzviskositäten.**

(30) Priorität: **17.01.86 DE 3601215**

(43) Veröffentlichungstag der Anmeldung: **22.07.87 Patentblatt 87/30**

(45) Bekanntmachung des Hinweises auf die Patenterteilung: **20.06.90 Patentblatt 90/25**

(84) Benannte Vertragsstaaten: **BE DE FR GB IT**

(56) Entgegenhaltungen:
**EP-A- 0 079 144**
**EP-A- 0 164 638**

**Die Akte enthält technische Angaben, die nach dem Eingang der Anmeldung eingereicht wurden und die nicht in dieser Patentschrift enthalten sind.**

(73) Patentinhaber: **BAYER AG, D-5090 Leverkusen 1 Bayerwerk(DE)**

(72) Erfinder: **Alewelt, Wolfgang, Dr., Stratumer Feld 17, D-4150 Krefeld 12(DE)**
Erfinder: **Alfes, Franz, Dr., Kruse Boemke 7, D-4150 Krefeld(DE)**
Erfinder: **Eisermann, Wolfgang, Dr., Auf der Krone 22, D-4000 Düsseldorf 31(DE)**
Erfinder: **Wolfgang, Jakob, Dipl.-Ing., Am Domacker 81, D-4130 Moers(DE)**
Erfinder: **Tresper, Erhard, Dr., Dahlerdyk 154, D-4150 Krefeld(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 229 626 B1

## Beschreibung

Die Erfindung betrifft hochmolekulare, gegebenenfalls verzweigte Polyarylensulfide, die auf übliche Weise hergestellt werden, indem dem Reaktionsgemisch 0,1 - 5 mol-%, bevorzugt 0,25 - 4 Mol-% eines Monophenols als Kettenregler zur Einstellung der Schmelzviskosität zugegeben werden.

Polyarylensulfide und ihre Herstellung sind bekannt (s. beispielsweise US-PS 2 513 188). Die Zugabe von anorganischen oder organischen Salzen zum Umsetzungsgemisch soll bekanntlich zur Erniedrigung des Schmelzflusses bzw. zur Erhöhung der Schmelzviskosität der gewonnenen Polyphenylensulfide beitragen. Erst bei ausreichend hoher Schmelzviskosität können Polyphenylensulfide thermoplastisch, z.B. zu Spritzgußteilen, Folien und Fasern verarbeitet werden. Ohne Zugabe der obengenannten Salze werden Polyphenylensulfide gewonnen, die den notwendigen geringen Schmelzfluß erst über eine separate und zusätzliche Nachkondensation bzw. Härtung (Curing) erhalten.

Als Salze werden z.B. Alkalicarboxylate (DE-AS 2 453 749), Lithiumhalogenide oder Alkalicarboxylate (DE-OS 2 623 362), Lithiumchlorid oder Lithiumcarboxylat (DE-OS 623 363), Alkalicarbonate in Kombination mit Alkalicarboxylaten (US-PS 4 038 259), Lithiumacetat (DE-OS 2 623 333), Trialkaliphosphate (DE-OS 2 930 710), Trialkaliphosphonate (DE-OS 2 930 797), Alkalifluoride (DE-OS 3 019 732), Alkalisulfonate (US-PS 4 038 260), Lithiumcarbonat undLithiumborat (US-PS 4 030 518) eingesetzt.

Aus der DE-OS 3 120 538 ist bekannt, Polyarylensulfide mit hohen Schmelzviskositäten durch Zugabe von N,N,-Dialkylcarbonsäureamiden zum Umsetzungsgemisch zu erhalten.

Die Verwendung von polaren Lösungsmitteln für die Herstellung von Polyarylensulfiden ist dort ebenfalls beschrieben.

Weiterhin werden Monothiophenole, Mercaptane oder Monohalogenaromaten als Kettenabbrecher beschrieben. Sie haben im Falle der Thioverbindungen den Nachteil der Sauerstoffempfindlichkeit, was die Kettenabbrecherwirkung vermindern kann und Verfärbungen im Produkt hervorruft; im Falle der Monohalogenaromaten bewirkt ihre geringe Reaktivität eine unbefriedigende Kettenabbrecherwirkung.

Es wurde jetzt gefunden, daß durch Zugabe von Monophenolen Polyarylensulfide erhalten werden, die sich durch einstellbare Schmelzviskositäten und hohe Stabilität der Schmelze auszeichnen.

Gegenstand der Erfindung sind hochmolekulare, gegebenenfalls verzweigte Polyarylensulfide, die hergestellt werden aus

a) 50-100 Mol-% Dihalogenaromaten der Formel

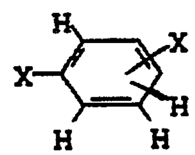

(I),

und 0 - 50 Mol-% Dihalogenaromaten der Formel

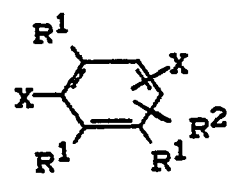

(II),

in denen

X für zueinander meta- und para-ständiges Halogen wie Chlor oder Brom steht und

$R^1$ und $R^2$ gleich oder verschieden ist und Wasserstoff, $C_1$-$C_4$-Alkyl, $C_5$-$C_{10}$-Cycloalkyl, $C_6$-$C_{10}$Aryl, $C_7$-$C_{10}$-Alkylaryl, $C_7$-$C_{14}$-Arylalkyl sein kann, wobei zwei zueinander orthoständige Reste $R^1$ zu einem aromatischen oder heterocyclischen, bis zu drei Heteroatomen wie N,O,S enthaltenden Ring verknüpft sein können und immer ein Rest $R^1$ verschieden von Wasserstoff ist

und

b) 0 - 5 Mol-%, bevorzugt 0,1 - 2,5 Mol-%, bezogen auf die Summe der Dihalogenaromaten der Formel I und II, eines Tri- oder Tetrahalogenaromaten der Formel

$ArX_n$ (III),

wobei

Ar ein aromatischer $C_6$-$C_{14}$-Rest oder ein heterocyclicher Rest mit 5-14 Ringatomen, wobei bis zu 3 Ring-C-Atome durch Heteroatome wie N,O,S ersetzt sein können, ist,

X für Halogen wie Chlor oder Brom steht und

n für die Zahl 3 oder 4 steht

und

c) 50 - 100 Mol-% Alkalisulfid, bevorzugt Natrium- oder Kaliumsulfid oder deren Mischung, z.B. in Form ihrer Hydrate oder wäßrigen Mischungen, gegebenenfalls zusammen mit geringen Mengen Alkalihydroxiden wie Natrium- und Kaliumhydroxid, und 0 - 50 Mol-% Alkalibisulfid, bevorzugt Natrium- und Kaliumhydrogensulfid, oder deren Mischung, wobei das molare Verhältnis von (a + b) : c im Bereich von 0,75 : 1 bis 1,25 : 1 liegen kann,

d) gegebenenfalls in Anwesenheit von Reaktionsbeschleunigern wie Alkalicarboxylaten, Alkaliphosphaten, Alkaliphosphonaten, Alkalifluoriden, Alkalialkylsulfonaten bzw. in Anwesenheit von N,N-Dialkylcarbonsäureamiden, Lactamen, Anhydriden und Estern von Carbonsäuren, dadurch gekennzeichnet, daß dem Reaktionsgemisch 0,1 - 5 Mol-%, vorzugsweise 0,25 - 4 Mol-%, bezogen auf Dihalogenverbindung Phenol oder Monophenole der Formel IV

$HO\text{-}A\text{-}Z\text{-}R^3$ (IV),

in welcher
A ein aromatischer Rest der Formeln (V), (VI) und (VII) ist

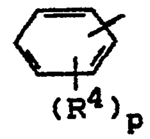

(V),

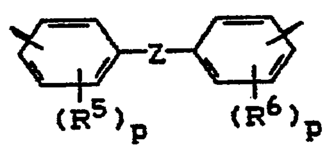

(VI),

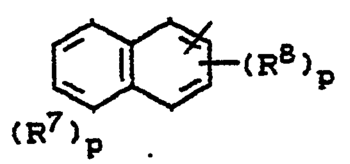

(VII),

worin die Reste $R^3$, $R^4$, $R^5$, $R^6$, $R^7$ und $R^8$ unabhängig für $C_1$-$C_{12}$-Alkyl, $C_7$-$C_{19}$-Alkaryl/Aralkyl, $C_3$-$C_6$-Cycloalkyl stehen und
Z für $C_1$-$C_6$-Alkyliden, $C_2$-$C_6$-Cycloalkyliden, CO, -S-, -SO-, $-SO_2$, O oder eine chemische Einfachbindung darstellt und
p für die Zahl 0, 1, 2, 3 oder 4 steht,
zugegeben werden.

Die Phenole können auch als Salze, z.B. Alkali- oder Erdalkalisalze eingesetzt werden.

Die Zugabe der Phenole der Formel IV kann vor oder während der Polymerisationsreaktion erfolgen.

Dabei können auch Gemische von Phenolen eingesetzt werden. Die Zugabe kann durch Dosierung über einen gewissen Zeitraum der Reaktion, portionsweise zu bestimmten Zeiten des Reaktionsablaufes oder durch direkte Zugabe der berechneten Gesamtmenge zu einem definierten Zeitpunkt der Reaktion erfolgen.

Die erfindungsgemäß hergestellten Polyarylensulfide zeichnen sich durch definierte Schmelzviskositäten abhängig vom Kettenabbrechergehalt aus, die reproduziert werden können. Das ist insofern von großer Bedeutung, als zur Verarbeitung der Polyarylensulfide Polymerschmelzen mit unterschiedlichem Fließverhalten eingestellt werden müssen, die dem jeweiligen Verwendungszweck angepaßt sein müssen.

So sind z.B. zur Herstellung von Folien und Fasern höhere Schmelzviskositäten als zur Einstellung von Glasfaser- bzw. Glasfaser/Mineralverstärkten Spritzgußtypen notwendig.

Ein weiterer Vorteil der erfindungsgemäßen Polyarylensulfide ist die größere Stabilität bei thermischer Belastung. Nur so ist gewährleistet, daß kein weiterer Auf- oder Abbau bei der thermoplastischen Verarbeitung, der zur vollständigen Veränderung des Eigenschaftsbildes führen kann, eintritt, und Regenerat nach der Verarbeitung wieder neu eingesetzt werden kann.

Die Aufarbeitung des Umsetzungsgemisches und die Isolierung der Polyarylensulfide können in bekannter, üblicher Weise erfolgen.

Erfindungsgemäß einsetzbare Monophenole sind z.B. Phenol, Kresole und höhere alkylierte Phenole,

Alkoxyphenole, Phenoxyphenole, Hydroxyphenylalkylsulfide, Hydroxydiphenylsulfide, Hydroxydiphenylsulfoxide, Hydroxydiphenylsulfone, Hydroxydiphenylketone, Hydroxydiphenyle, Hydroxynaphthaline.

Vorzugsweise werden eingesetzt:

Phenol, p-tert-Butylphenol, p-Isooctylphenol, 4-Methoxyphenol, 4-Hydroxydiphenylether, 4-Hydroxyphenylethylsulfid, 4-Hydroxydiphenylsulfid, 4-Hydroxydiphenylsulfoxid, 4-Hydroxydiphenylsulfon, 4-Hydroxydiphenylketon, 4-Hydroxydiphenyl, 2-Hydroxynaphthalin.

Die erfindungsgemäßen Polyarylensulfide können zu Folien oder Fasern verarbeitet oder mit anderen Polymeren, Pigmenten und Füllstoffen - beispielsweise Graphit, Metallpulver, Glaspulver, Quarzmehl, Glasfasern oder Kohlefasern -, gemischt oder mit den für Polyarylensulfide üblichen Additiven, beispielsweise Stabilisatoren oder Entformungsmitteln, versetzt werden.

Im allgemeinen wird das Schmelzfließverhalten von Polyarylensulfiden nach ASTM 1238-70 bei 316°C unter Verwendung eines 5 kg-Gewichtes gemessen und in g/10 min angegeben.

Bei hohen Schmelzflußwerten kann diese Messung jedoch aufgrund der hohen Ausflußrate der Polymerschmelze Schwierigkeiten bereiten.

Es wurde deshalb die Schmelzviskosität m der Polymerschmelze (in Pa.s) bei 306°C in Abhängigkeit von der Schubspannung (in Pa) mit Hilfe des Instron-Rotationsviskosimeters bestimmt.

Man kann auf diese Weise die Schmelzviskosität in einem sehr weiten Bereich von $10^{-1}$ bis $10^7$ Pa.s bestimmen. In dem Instron-Rheometer wird das Polymer zwischen einer festen Platte in einem drehbaren Kegel geschmolzen und das Drehmoment des Kegels bestimmt. Aus dem Drehmoment, der Winkelgeschwindigkeit und den apparativen Daten kann die Schmelzviskosität in Abhängigkeit von der Schubspannung erechnet werden. Verwendet wurde das Rheometer Modell 3250 der Firma Instron, Durchmesser des Kegels und der Platte 2 cm. Angegeben wird die Schmelzviskosität, die bei einer Schubspannung von $\tau = 10^3$ Pa gemessen wird.

Die erfindungsgemäßen Polyarylensulfide besitzen nach der Isolierung aus dem Reaktionsgemisch Schmelzviskositäten zwischen 1 und 1 x $10^3$ Pa.s, vorzugsweise 5 bis 5 x $10^2$ Pa.s. Sie können in der üblichen Weise verarbeitet werden.

Beispiele

Beispiel 1

Zu 2100 g N-Methylcaprolactam und 940,8 g p-Dichlorbenzol wurden 756,75 g Natriumsulfid-Hydrat (ca. 60 %ig)
135 g 2,5 %ige Natronlauge und
108 g Caprolactam
bei einer Temperatur von 220°C zudosiert.

Die Zudosierrate richtet sich nach dem Umsatz und wird so eingestellt, daß die Temperatur von 220°C bei gleichzeitiger zusätzlicher Beheizung des Reaktionsgefäßes eingehalten werden kann. Bei der Dosierung wird gleichzeitig das Wasser aus der Reaktion entfernt.

Nach der Dosierung gibt man 9 g Phenol in 50 ml N-Methylcaprolactam hinzu. Nach 7 Stunden Nachreaktionszeit bei schwachem Rückfluß wird das PPS in Wasser ausgefällt, elektrolytfrei gewaschen und mit einem organischen Lösungsmittel kurz extrahiert. Das getrocknete p-Polyphenylensulfid hat eine Schmelzviskosität von 45 Pa.s (gemessen bei $10^3$ Pa und 306°C).

Beispiel 2 (Vergleichsbeispiel zu Beispiel 1 ohne Kettenabbrecher)

Wie Beispiel 1, jedoch wird kein Phenol eingesetzt. Das erhaltene Polyphenylensulfid hat eine Schmelzviskosität von 1380 Pa.s (gemessen bei $10^3$ Pa und 306°C).

Beispiel 3

Wie Beispiel 1, jedoch werden 3,0 g (0,5 Mol-%) Phenol eingesetzt. Das erhaltene Polyphenylensulfid hat eine Schmelzviskosität von 210 Pa.s (gemessen bei $10^3$ Pa und 306°C).

Beispiel 4

Wie Beispiel 1, jedoch werden 15 g (2,5 Mol-%) Phenol eingesetzt. Das erhaltene Polyphenylensulfid hat eine Schmelzviskosität von 12 Pa.s (gemessen bei $10^3$ Pa und 306°C).

Beispiel 5

Wie Beispiel 1, jedoch wird Phenol bereits zu Beginn der Dosierung zugegeben. Das erhaltene Polyphenylensulfid hat eine Schmelzviskosität von 52 Pa.s (gemessen bei $10^3$ Pa und 306°C).

Beispiel 6

Wie Beispiel 1, jedoch werden 19,8 g p-Isooctylphenol als Kettenabbrecher eingesetzt. Das erhaltene Polyphenylensulfid hat eine Schmelzviskosität von 44 Pa.s (gemessen bei $10^3$ Pa und 306°C).

Zur Überprüfung der thermischer Stabilität der Polyphenylensulfide wurden die Produkte gemäß Beispiel 1 und Beispiel 2 vergleichend in einem Zweiwellenextruder vom Typ ZSK 32 bei 320°C aufgeschmolzen, als Faden abgezogen und granuliert. Der Vorgang wurde dreimal wiederholt und anschließend die Schmelzviskosität bestimmt:
PPS gemäß Beispiel 1: 80 Pa.s (gemessen bei $10^3$ Pa und 306°C)
PPS gemäß Beispiel 2: 40 Pa.s (gemessen bei $10^3$ Pa und 306°C)

**Patentansprüche**

1. Hochmolekulare, gegebenenfalls verzweigte Polyarylensulfide, erhältlich aus
a) 50–100 Mol-% Dihalogenaromaten der Formel

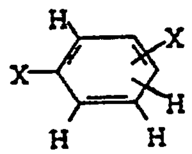 (I),

und 0–50 Mol-% Dihalogenaromaten der Formel

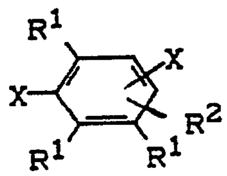 (II),

in denen
X für zueinander meta- und para-ständiges Halogen wie Chlor oder Brom steht und
$R^1$ und $R^2$ gleich oder verschieden ist und Wasserstoff, $C_1$–$C_4$-Alkyl, $C_5$–$C_{10}$-Cycloalkyl, $C_6$–$C_{10}$-Aryl, $C_7$–$C_{10}$-Alkylaryl, $C_7$–$C_{14}$-Arylalkyl sein kann, wobei zwei zueinander orthoständige Reste $R^1$ zu einem aromatischen oder heterocyclischen, bis zu drei Heteroatomen wie N, O, S enthaltenden Ring verknüpft sein können und immer ein Rest $R^1$ verschieden von Wasserstoff ist und
b) 0–5 Mol-%, bezogen auf die Summe der Dihalogenaromaten der Formel I und II, eines Tri- oder Tetrahalogenaromaten der Formel III

$ArX_n$ (III),

wobei
Ar ein aromatischer $C_6$–$C_{14}$-Rest oder ein heterocyclischer Rest mit 5–14 Ringatomen, wobei bis zu 3 Ring-C-Atome durch Heteroatome wie N, O, S ersetzt sein können, ist,
X für Halogen wie Chlor oder Brom steht und
n für die Zahl 3 oder 4 steht
und
c) 50–100 Mol-% Alkalisulfid, bevorzugt Natrium- oder Kaliumsulfid oder deren Mischung, z.B. in Form ihrer Hydrate oder wäßrigen Mischungen, gegebenenfalls zusammen mit geringen Mengen Alkalihydroxiden wie Natrium- und Kaliumhydroxid, und 0–50 Mol-% Alkalibisulfid, bevorzugt Natrium- und Kaliumhydrogensulfid, oder deren Mischung, wobei das molare Verhältnis von (a + b) : c im Bereich von 0,75 : 1 bis 1,25 : 1 liegen kann,
d) gegebenenfalls in Anwesenheit von Reaktionsbeschleunigern wie Alkalicarboxylaten, Alkaliphosphaten, Alkaliphosphonaten, Alkalifluoriden, Alkalialkylsulfonaten bzw. in Anwesenheit von N,N-Dialkylcarbonsäureamiden, Lactamen, Anhydriden und Estern von Carbonsäuren, dadurch gekennzeichnet, daß dem Reaktionsgemisch 0,1–5 Mol %, bezogen auf Dihalogenverbindung, Phenol, oder Monophenole der Formel IV

HO–A–Z–$R^3$ (IV),

in welcher
A ein aromatischer Rest der Formeln (V), (VI) oder (VII) ist,

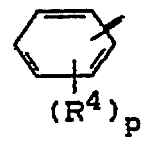 (V),

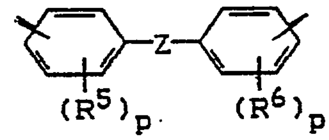 (VI),

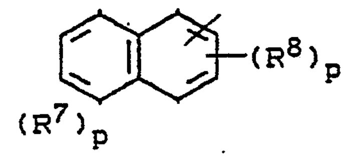 (VII),

worin die Reste $R^3$, $R^4$, $R^5$, $R^6$, $R^7$ und $R^8$ unabhängig voneinander für $C_1$–$C_{12}$-Alkyl, $C_7$–$C_{19}$-Alkaryl/Aralkyl, $C_3$–$C_6$-Cycloalkyl stehen,
Z für $C_1$–$C_6$-Alkyliden, $C_2$–$C_6$-Cycloalkyliden, CO, –S–, –SO–, $–SO_2–$, –O– oder eine Einfachbindung steht und
p für die Zahl 0, 1, 2, 3 oder 4 steht
zugegeben werden.

2. Verfahren zur Herstellung von hochmolekularen, gegebenenfalls verzweigten Polyarylensulfiden, aus

a) 50–100 Mol-%Dihalogenaromaten der Formel

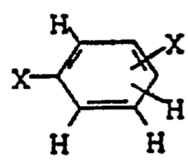 (I),

und 0–50 Mol-% Dihalogenaromaten der Formel

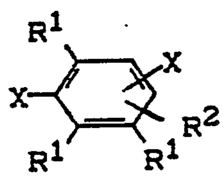 (II),

in denen
X für zueinander meta- und para-ständiges Halogen wie Chlor oder Brom steht und
$R^1$ und $R^2$ gleich oder verschieden ist und Wasserstoff, $C_1$–$C_4$-Alkyl, $C_5$–$C_{10}$-Cycloalkyl, $C_6$–$C_{10}$-Aryl, $C_7$–$C_{10}$-Alkylaryl, $C_7$–$C_{14}$-Arylalkyl sein kann, wobei zwei zueinander orthoständige Reste $R^1$ zu einem aromatischen oder heterocyclischen, bis zu drei Heteroatomen wie N, O, S enthaltenden Ring verknüpft sein können und immer ein Rest $R^1$ verschieden von Wasserstoff ist und

b) 0–5 Mol-%, bezogen auf die Summe der Dihalogenaromaten der Formel I und II, eines Tri- oder Tetrahalogenaromaten der Formel III

ArXn (III),

wobei
Ar ein aromatischer $C_6$–$C_{14}$-Rest oder ein heterocyclischer Rest mit 5–14 Ringatomen, wobei bis zu 3 Ring-C-Atome durch Heteroatome wie N, O, S ersetzt sein können, ist,
X für Halogen wie Chlor oder Brom steht und
n für die Zahl 3 oder 4 steht
und

c) 50–100 Mol-% Alkalisulfid, bevorzugt Natrium- oder Kaliumsulfid oder deren Mischung, z.B. in Form ihrer Hydrate oder wäßrigen Mischungen, gegebenenfalls zusammen mit geringen Mengen Alkalihydroxiden wie Natrium- und Kaliumhydroxid, und 0–50 Mol-% Alkalibisulfid, bevorzugt Natrium- und Kaliumhydrogensulfid, oder deren Mischung, wobei das molare Verhältnis von (a + b) : c im Bereich von 0,75 : 1 bis 1,25 : 1 liegen kann,

d) gegebenenfalls in Anwesenheit von Reaktionsbeschleunigern wie Alkalicarboxylaten, Alkaliphosphaten, Alkaliphosphonaten, Alkalifluoriden, Alkalialkylsulfonaten bzw. in Anwesenheit von N,N-Dialkylcarbonsäureamiden, Lactamen, Anhydriden und Estern von Carbonsäuren, dadurch gekennzeichnet, daß dem Reaktionsgemisch 0,1–5 Mol %, bezogen auf Dihalogenverbindung Phenol oder Monophenole der Formel IV

HO–A–Z–$R^3$ (IV),

in welcher
A ein aromatischer Rest der Formeln (V), (VI)
oder (VII) ist,

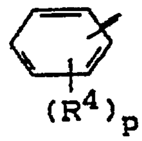

(V),

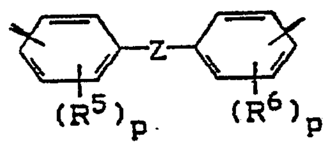

(VI),

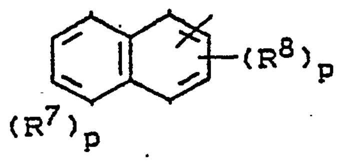

(VII),

worin die Reste $R^3$, $R^4$, $R^5$, $R^6$, $R^7$ und $R^8$ unabhängig voneinander für $C_1$–$C_{12}$-Alkyl, $C_7$–$C_{19}$-Alkaryl/Aralkyl, $C_3$–$C_6$-Cycloalkyl stehen,
Z für $C_1$–$C_6$-Alkyliden, $C_2$–$C_6$-Cycloalkyliden, CO, –S–, –SO–, –$SO_2$–, –O– oder eine Einfachbindung steht und
p für die Zahl 0, 1, 2, 3 oder 4 steht,
zugegeben werden.

3. Verfahren nach Anspruch 2 dadurch gekennzeichnet, daß 0,25 bis 4,0 Mol-% Monophenole der Formel IV eingesetzt werden.

4. Verfahren nach Anspruch 2, dadurch gekennzeichnet, daß als Monophenol Phenol eingesetzt wird.

5. Verfahren nach Anspruch 2, dadurch gekennzeichnet, daß die Monophenole als Alkali- oder Erdalkalisalze eingesetzt werden.

**Claims**

1. High molecular weight, optionally branched polyarylene sulfides obtainable from
a) 50 to 100 mol-% aromatic dihalogen compounds corresponding to the following formula

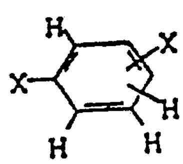

(I),

and 0 to 50 mol-% aromatic dihalogen compounds corresponding to the following formula

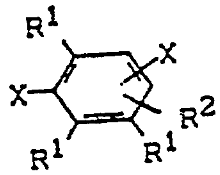

(II),

in which
the X's represent halogens, such as chlorine or bromine, in the meta- and para- position to one another and $R^1$ and $R^2$ may be the same or different and represent hydrogen, $C_{1-4}$ alkyl, $C_{5-10}$ cycloalkyl, $C_{6-10}$ aryl, $C_{7-10}$ alkylaryl, $C_{7-14}$ arylalkyl; two substituents $R^1$ in the ortho position to one another may be attached to form an aromatic or heterocyclic ring containing up to three hetero atoms, such as N, O, S and one substituent $R^1$ is always different from hydrogen
and
b) 0 to 5 mol-%, based on the sum of the aromatic dihalogen compounds corresponding to formulae I and II, of an aromatic tri- or tetrahalogen compound corresponding to formula III

ArXn (III)

in which
Ar is an aromatic $C_{6-14}$ radical or a heterocyclic radical containing 5 to 14 ring atoms, up to three ring C atoms being replaceable by hetero atoms, such as N, O, S,
X is halogen, such as chlorine or bromine, and n is the number 3 or 4,
c) 50 to 100 mol-% alkali sulfide, preferably sodium or potassium sulfide or mixtures thereof, for example in the form of their hydrates or aqueous mixtures, optionally together with small quantities of alkali hydroxides, such as sodium and potassium hydroxide, and 0 to 50 mol-% alkali bisulfide, preferably sodium and potasssium hydrogen sulfide or mixtures thereof, the molar ratio of (a + b) : c being from 0.75 : 1 to 1.25 : 1
d) optionally in the presence of reaction accelerators, such as alkali carboxylates alkali phosphates, alkali phosphonates, alkali fluorides, alkali alkyl sulfonates and in the presence of N, N-dialkylcarboxylic acid amides, lactams, anhydrides and esters of carboxylic acids, characterized in that phenol or monophenols corresponding to formula IV

$HO-A-Z-R^3$ (IV)

in which
A represents an aromatic radical corresponding to formula (V), (VI) or (VII)

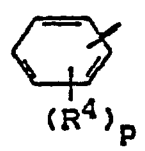

(V),

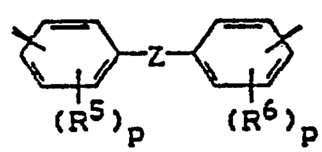

(VI),

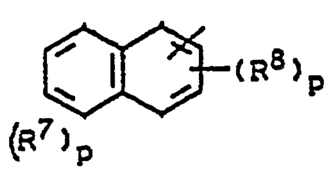

(VII),

wherein $R^3$, $R^4$, $R^5$, $R^6$, $R^7$ and $R^8$ independently of one another represent $C_{1-12}$ alkyl, $C_{7-19}$ alkaryl/aralkyl, $C_{3-6}$ cycloalkyl,
Z represents $C_{1-6}$ alkylidene, $C_{2-6}$ cycloalkylidene, CO,–S–, –SO–, $-SO_2-$, –O– or a single bond and
p is the number 0, 1, 2, 3 or 4
are added to the reaction mixture in quantities of 0.1 to 5 mol-%, based on dihalogen compound.

2. A process for the production of high molecular weight, optionally branched polyarylene sulfides from
a) 50 to 100 mol-% aromatic dihalogen compounds corresponding to the following formula

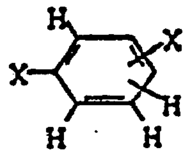

(I),

and 0 to 50 mol-% aromatic dihalogen compounds corresponding to the following formula

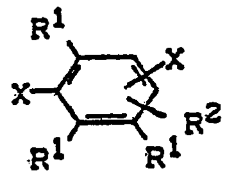

(II),

in which
the X's represents halogens, such as chlorine or bromine, in the meta- and para- position to one another and
$R^1$ and $R^2$ may be the same or different and represent hydrogen, $C_{1-4}$ alkyl, $C_{5-10}$ cycloalkyl, $C_{6-10}$ aryl, $C_{7-10}$ alkylaryl, $C_{7-14}$ arylalkyl; two substituents $R^1$ in the ortho position to one another may be attached to form an aromatic or heterocyclic ring containing up to three hetero atoms, such as N, O, S and one substituent $R^1$ is always different from hydrogen and
b) 0 to 5 mol-%, based on the sum of the aromatic dihalogen compounds corresponding to formulae I and II, of an aromatic tri- or tetrahalogen compound corresponding to formula III

ArXn (III)

in which
Ar is an aromatic $C_{6-14}$ radical or a heterocyclic radical containing 5 to 14 ring atoms, up to three ring C atoms being replaceable by hetero atoms, such as N, O, S,
X is halogen, such as chlorine or bromine, and n is the number 3 or 4,
c) 50 to 100 mol-% alkali sulfide, preferably sodium or potassium sulfide or mixtures thereof, for example in the form of their hydrates or aqueous mixtures, optionally together with small quantities of alkali hydroxides, such as sodium and potassium hydroxide, and 0 to 50 mol-% alkali bisulfide, preferably sodium and potasssium hydrogen sulfide or mixtures thereof, the molar ratio of (a + b) : c being from 0.75 : 1 to 1.25 : 1
d) optionally in the presence of reaction accelerators, such as alkali carboxylates, alkali phosphates, alkali phosphonates, alkali fluorides, alkali alkyl sulfonates and in the presence of N, N-dialkylcarboxylic acid amides, lactams, anhydrides and esters of carboxylic acids, characterized in that phenol or monophenols corresponding to formula IV

$HO-A-Z-R^3$ (IV)

in which
A represents an aromatic radical corresponding to formula (V), (VI) or (VII)

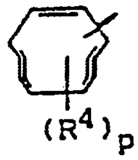

(V),

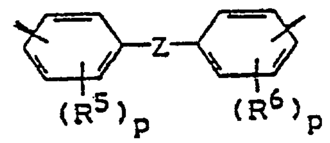

(VI),

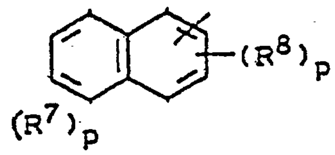

(VII),

wherein
$R^3$, $R^4$, $R^5$, $R^6$, $R^7$ and $R^8$ independently of one another represent $C_{1-12}$ alkyl, $C_{7-19}$ alkaryl/aralkyl, $C_{3-6}$ cycloalkyl,
Z represents $C_{1-6}$ alkylidene, $C_{2-6}$ cycloalkylidene, CO, –S–, –SO–, $-SO_2-$, –O– or a single bond and p is the number 0, 1, 2, 3 or 4 are added to the reaction mixture in quantities of 0.1 to 5 mol-%, based on dihalogen compound.

3. A process as claimed in claim 2, characterized in that the monophenols of formula IV are used in quantities of 0.25 to 4.0 mol-%.

4. A process as claimed in claim 2, characterized in that phenol is used as the monophenol.

5. A process as claimed in claim 2, characterized in that the monophenols are used in the form of alkali metal or alkaline earth metal salts.

**Revendications**

1. Polyarylènesulfures éventuellement ramifiés, de haut poids moléculaire, obtenus à partir
a) de 50 à 100 moles % d'hydrocarbures aromatiques dihalogénés de formule

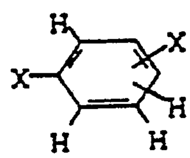

(I),

et de 0 à 50 moles % d'hydrocarbures aromatiques dihalogénés de formule

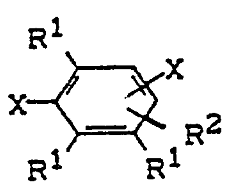

(II),

formules dans lesquelles
X désigne des halogènes en positions méta et para l'un par rapport à l'autre, tels que le chlore ou le brome et
$R^1$ et $R^2$ sont identiques ou différents et peuvent représenter de l'hydrogène, des groupes alkyle en $C_1$ à $C_4$, cycloalkyle en $C_5$ à $C_{10}$, aryle en $C_6$ à $C_{10}$, alkylaryle en $C_7$ à $C_{10}$, arylalkyle en $C_7$ à $C_{14}$, deux restes $R^1$ en positions ortho l'un par rapport à l'autre pouvant former conjointement un noyau aromatique ou hétérocyclique contenant jusqu'à 3 hétéroatomes tels que N, O et S et dans tous les cas, l'un des restes $R^1$ étant différent de l'hydrogène et
b) de 0 à 5 moles %, par rapport à la somme des hydrocarbures aromatiques dihalogénés de formules I et II, d'un hydrocarbure aromatique trihalogéné ou tétrahalogéné de formule III

ArXn (III),

dans laquelle
Ar est un reste aromatique en $C_6$ à $C_{14}$ ou un reste hétérocyclique à noyau de 5 à 14 atomes, jusqu'à 3 atomes de carbone du noyau pouvant être remplacés par des hétéroatomes tels que N, O, S,
X est un halogène tel que le chlore ou le brome et
n représente le nombre 3 ou 4 et
c) de 50 à 100 moles % d'un sulfure alcalin, de préférence le sulfure de sodium ou de potassium ou leur mélange, par exemple sous forme de leur hydrate ou de leurs mélanges aqueux, le cas échéant conjointement avec de faibles quantités d'hydroxydes alcalins tels que l'hydroxyde de sodium et l'hydroxyde de potassium, et de 0 à 50 moles % de bisulfure alcalin, de préférence l'hydrogénosulfure de sodium et l'hydrogénosulfure de potassium ou leur mélange, le rapport molaire (a + b) : c pouvant se situer dans la plage de 0,75 : 1 à 1,25 : 1,
d) le cas échéant en présence d'accélérateurs de réaction tels que des carboxylates alcalins, des phosphates alcalins, des phosphonates alcalins, des fluorures alcalins, des alkylsulfonates alcalins ou en présence de N,N-dialkylcarboxamides, de lactames, d'anhydrides et d'esters d'acides carboxyliques, caractérisés en ce qu'on ajoute au mélange réactionnel 0,1 à 5 moles %, par rapport au composé dihalogéné, de phénol ou de monophénols de formule IV

$HO-A-Z-R^3$ (IV),

dans laquelle
A est un reste aromatique de formules (V), (VI) ou (VII),

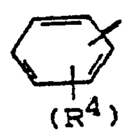 (V),

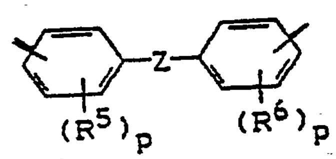 (VI),

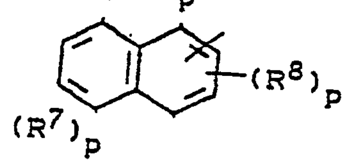 (VII),

où les restes $R^3$, $R^4$, $R^5$, $R^6$, $R^7$ et $R^8$ représentent indépendamment les uns des autres des restes alkyle en $C_1$ à C12, alkaryle/aralkyle en $C_7$ à $C_{19}$, cycloalkyle en $C_3$ à $C_6$,
Z est un reste alkylidène en $C_1$ à $C_6$, cycloalkylidène en $C_2$ à $C_6$, CO, –S–, –SO–, $-SO_2-$, –O– ou une liaison simple et
p représent le mombre 0, 1, 2, 3 ou 4.
2. Procédé de production de polyarylènesulfures éventuellement ramifiés de haut poids moléculaire, à partir:
a) de 50 à 100 moles % d'hydrocarbures aromatiques dihalogénés de formule

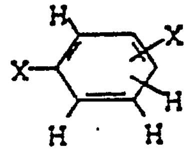 (I),

et de 0 à 50 moles % d'hydrocarbures aromatiques dihalogénés de formule

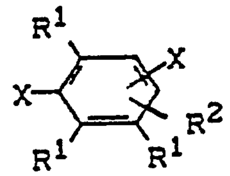

(II),

formules dans lesquelles

X désigne des halogènes en positions méta et para l'un par rapport à l'autre, tels que le chlore ou le brome et

$R^1$ et $R^2$ sont identiques ou différents et peuvent représenter de l'hydrogène, des groupes alkyle en $C_1$ à $C_4$, cycloalkyle en $C_5$ à $C_{10}$, aryle en $C_6$ à $C_{10}$, alkylaryle en $C_7$ à $C_{10}$, arylalkyle en $C_7$ à $C_{14}$, deux restes $R^1$ en positions ortho l'un par rapport à l'autre pouvant former conjointement un noyau aromatique ou hétérocyclique contenant jusqu'à 3 hétéroatomes tels que N, O et S et dans tous les cas, l'un des restes $R^1$ étant différent de l'hydrogène et

b) de 0 à 5 moles %, par rapport à la somme des hydrocarbures aromatiques dihalogénés de formules I et II, d'un hydrocarbure aromatique trihalogéné ou tétrahalogéné de formule III

ArXn (III),

dans laquelle

Ar est un reste aromatique en $C_6$ à $C_{14}$ ou un reste hétérocyclique à noyau de 5 à 14 atomes, jusqu'à 3 atomes de carbone du noyau pouvant être remplacés par des hétéroatomes tels que N, O, S,

X est un halogène tel que le chlore ou le brome et

n représente le nombre 3 ou 4 et

c) de 50 à 100 moles % d'un sulfure alcalin, de préférence le sulfure de sodium ou de potassium ou leur mélange, par exemple sous forme de leur hydrate ou de leurs mélanges aqueux, le cas échéant conjointement avec de faibles quantités d'hydroxydes alcalins tels que l'hydroxyde de sodium et l'hydroxyde de potassium, et de 0 à 50 moles % de bisulfure alcalin, de préférence l'hydrogénosulfure de sodium et l'hydrogénosulfure de potassium ou leur mélange, le rapport molaire (a + b) : c pouvant se situer dans la plage de 0,75 : 1 à 1,25 : 1,

d) le cas échéant en présence d'accélérateurs de réaction tels que des carboxylates alcalins, des phosphates alcalins, des phosphonates alcalins, des fluorures alcalins, des alkylsulfonates alcalins ou en présence de N,N-dialkylcarboxamides, de lactames, d'anhydrides et d'esters d'acides carboxyliques, caractérisé en ce qu'on ajoute au mélange réactionnel 0,1 à 5 moles %, par rapport au composé dihalogéné, de phénol ou de monophénols de formule IV

HO–A–Z–$R^3$ (IV),

dans laquelle

A est un reste aromatique de formules (V), (VI) ou (VII),

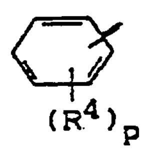

(V),

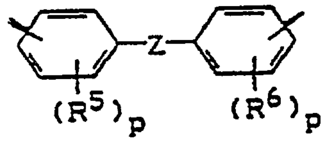

(VI),

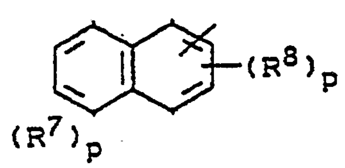

(VII),

où les restes $R^3$, $R^4$, $R^5$, $R^6$, $R^7$ et $R^8$ représentent indépendamment les uns des autres des groupes alkyle en $C_1$ à $C_{12}$, alkaryle/aralkyle en $C_7$ à $C_{19}$, cycloalkyle en $C_3$ à $C_6$,

Z est un groupe alkylidène en $C_1$ à $C_6$, cycloalkylidène en $C_2$ à $C_6$, CO, –S–, –SO–, $-SO_2-$, –O– ou une liaison simple et

p représente le nombre 0, 1, 2, 3 ou 4.

3. Procédé suivant la revendication 2, caractérisé en ce qu'on utilise 0,25 à 4,0 moles % de monophénols de formule IV.

4. Procédé suivant la revendication 2, caractérisé en ce qu'on utilise le phénol comme monophénol.

5. Procédé suivant la revendication 2, caractérisé en ce que les monophénols sont utilisés sous forme de sels alcalins ou alcalino-terreux.